# EUROPEAN PATENT APPLICATION

(11) **EP 4 421 641 A1**
(43) Date of publication of application: **28.08.2024**
(21) Application number: 22931261.6
(22) Date of filing: 29.12.2022
(51) Int. Cl.: G06F 11/16, G06F 11/20, G06F 11/07, G06F 9/30, B60W 50/029

(54) **REDUNDANT STORAGE DEVICE FOR AUTONOMOUS VEHICLE**

(71) Applicant: RTST Co., Ltd., Seo-gu Daejeon 35203 (KR)
(72) Inventor: YANG, Seokwoo, Daejeon 35209 (KR); HWANG, Jeaho, Daejeon 34187 (KR)
(74) Representative: Schmitt-Nilson Schraud Waibel Wohlfrom Patentanwälte Partnerschaft mbB
(86) International application number: PCT/KR2022/021625
(87) International publication number: WO 2024/143618

(57) **Abstract**

A dual storage device for an autonomous vehicle includes a first device, a second device, and a node connected to the first device or the second device to process data.

## Description

### [TECHNICAL FIELD]

The present disclosure relates to a storage device, and more specifically, to a storage device that is applied to an autonomous vehicle and is able to dually store data.

### (BACKGROUND ART)

In a mission-critical system such as an electric system of an autonomous vehicle, availability to ensure that each function always operates is very important. Therefore, important functions such as an in-vehicle network are designed based on the availability. However, application of technology to ensure high availability to a storage device of the electric system of the autonomous vehicle has not yet been completed. When an error occurs in the storage device with low availability, accesses to read or write may not be processed in the storage device and the storage device may malfunction, which may lead to a serious accident. Therefore, there is a need for a storage device for the autonomous vehicle that may ensure safety even in an event of system malfunction or temporary failure while having high availability.

The present invention is derived from an autonomous driving technology development innovation project(R&D) of the Ministry of Science and ICT(Project Identification No.: 1711134515, Project name: (3details) Cloud, Edge, Car 3-Tier Linked Recognition/Judgment/Control SW and Common SW Research conducted as part of platform technology development, Institution of research and management: Institute for Information & communication Technology Planning & evaluation IITP, Supervisor: RTST, Research period: 2021.04.01. ~ 2023.12.31.).

Meanwhile, there is no property interest of the Korean government in any aspect of this invention.

### [DETAILED DESCRIPTION OF THE INVENTION]

### [TECHNICAL PROBLEM]

The present disclosure is to provide a storage device for an autonomous vehicle that may dually store data.

### [TECHNICAL SOLUTION]

A dual storage device for an autonomous vehicle according to one embodiment includes a first device, a second device, and a node connected to the first device or the second device to process data, the first device includes first storage that stores data, a first synchronizing device that synchronizes with the second device using the data stored in the first storage, a first managing device that transmits and receives a state-related signal with the second device, and a first network device that transmits the data stored in the first storage to the node, and the second device includes second storage that stores data, a second synchronizing device that synchronizes with the first device using the data stored in the second storage, a second managing device that transmits and receives a state-related signal with the first device, and a second network device that transmits the data stored in the second storage to the node.

In one implementation, the first synchronizing device may transmit the data stored in the first storage to the second synchronizing device and transmit the data obtained from the second synchronizing device to the first storage, and the second synchronizing device may transmit the data stored in the second storage to the first synchronizing device and transmit the data obtained from the first synchronizing device to the second storage.

In one implementation, the first managing device may transmit a first identification signal to the second managing device, and the second managing device may transmit a first response signal to the first managing device in response to the first identification signal, the second managing device may transmit a second identification signal to the first managing device, and the first managing device may transmit a second response signal to the second managing device in response to the second identification signal, and the first managing device and the second managing device may periodically transmit the first identification signal and the second identification signal, respectively.

In one implementation, the first storage may include a first dual data area and a first non-dual data area, the second storage may include a second dual data area and a second non-dual data area, the first synchronizing device may transmit data stored in the first dual data area to the second synchronizing device, but not transmit data stored in the first non-dual data area, and the second synchronizing device may transmit data stored in the second dual data area to the first synchronizing device, but not transmit data stored in the second non-dual data area.

In one implementation, the first device may include a first controller that classifies the obtained data as dual data or non-dual data based on characteristics of the data such that data classified as the dual data is stored in the first dual data area and data classified as the non-dual data is stored in the first non-dual data area, and the second device may include a second controller that classifies the obtained data as the dual data or the non-dual data based on characteristics of the data such that data classified as the dual data is stored in the second dual data area and data classified as the non-dual data is stored in the second non-dual data area.

In one implementation, the characteristics of the data may include a degree of relevance to safety, a size of data, a temporality, and an importance.

In one implementation, the first network device may transmit the data stored in the first storage to the node when the first device is in an active state, and the second network device may transmit the data stored in the second storage to the node when the second device is in the active state.

In one implementation, the first device may include a first controller that determines whether the first device is in the active state based on whether the first managing device has obtained the first response signal, and the second device may include a second controller that determines whether the second device is in the active state based on whether the second managing device has obtained the second response signal.

### [ADVANTAGEOUS EFFECTS OF THE INVENTION]

According to one embodiment of the present disclosure, the storage device for the autonomous vehicle that may dually store the data may be provided.

### [DESCRIPTION OF THE DRAWINGS]

FIG. 1 is a block diagram of a dual storage device for an autonomous vehicle according to an embodiment.
FIG. 2 is a specific block diagram of a dual storage device for an autonomous vehicle according to an embodiment.

### [BEST MODE]

Because embodiments described herein are intended to clearly illustrate the spirit of the present disclosure to those skilled in the art to which the present disclosure belongs, the present disclosure is not limited to the embodiments described herein, and the scope of the present disclosure should be construed as including modifications or variations that do not deviate from the spirit of the present disclosure.

For the terms used herein, general terms that are currently widely used are selected as much as possible in consideration of functions in the present disclosure, but these may vary depending on intentions of those skilled in the art to which the present disclosure belongs, precedents, or appearance of new technologies. On the other hand, when a specific term is defined and used in an arbitrary meaning, the meaning of the term will be separately described. Therefore, the term used herein should be interpreted based on actual meaning of the term and content throughout the present document, not a simple name of the term.

The drawings attached to the present document are intended to easily illustrate the present disclosure. Because shapes shown in the drawings may be exaggerated as necessary to help understand the present disclosure, the present disclosure is not limited by the drawings.

Herein, when it is determined that a detailed description of a known component or function related to the present disclosure may obscure the gist of the present disclosure, the detailed description thereof will be omitted as necessary.

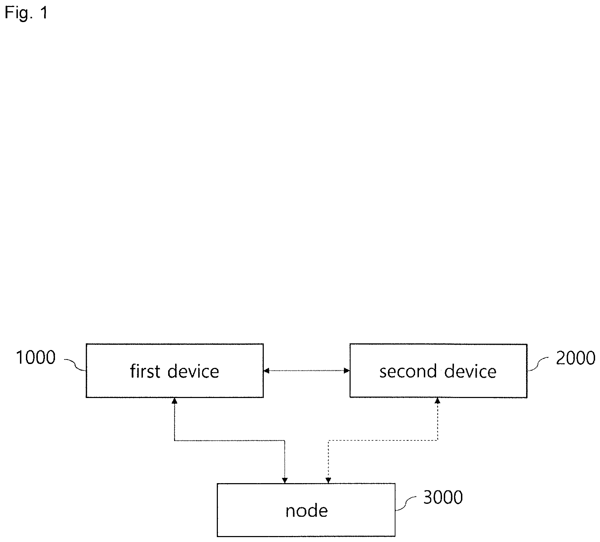

FIG. 1 is a block diagram of a dual storage device for an autonomous vehicle according to an embodiment.

Referring to FIG. 1, the dual storage device for the autonomous vehicle according to one embodiment may include a first device 1000, a second device 2000, and a node 3000.

The dual storage device for the autonomous vehicle may store data dually by having two or more storage devices therein. For example, the dual storage device for the autonomous vehicle may include the first device 1000 and the second device 2000 that may store the data therein. FIG. 1 shows that the number of storage devices included in the dual storage device for the autonomous vehicle is two, but the present disclosure is not limited thereto.

The first device 1000 and the second device 2000 may be internal data storage devices of the dual storage device for the autonomous vehicle. Specifically, the first device 1000 and the second device 2000 may be storage devices respectively having separate controllers. For example, an operating system such as Linux may be installed in each of the first device 1000 and the second device 2000 and each device may include a plurality of functional components, but the present disclosure may not be limited thereto. The first device 1000 and the second device 2000 may be in communication with each other to synchronize data and identify each other's state (whether the other is alive).

The first device 1000 and the second device 2000 may be in communication with the node 3000. Specifically, the data stored in the first device 1000 and the second device 2000 may be routed to the activated node 3000 and transferred to an external system. In this regard, the external system may be a system that performs a function related to the autonomous vehicle. For example, the external system may be a device installed inside or outside the vehicle, such as a navigation system or a sensor, but the present disclosure may not be limited thereto.

The node 3000 may be an in-vehicle network (Automotive Ethernet) connected to the external system. There may be a plurality of nodes 3000, but the node 3000 may be the activated node among the plurality of nodes in communication with the first device 1000 or the second device 2000.

The node 3000 may be in communication only with a device in an active state (the first device in FIG. 1). Specifically, the node 3000 is not in communication with the two devices simultaneously. When an error occurs in the device in the active state, the node 3000 is in communication with a device in a standby state, not the device in the active state, by a network device included in the device in the standby state.

One of the first device 1000 and the second device 2000 may be executed in the active state and the other may be executed in the standby state. In this regard, the external system may transmit data to storage included in the device in the active state or obtain data from the storage via the node 3000 connected to the device in the active state.

In this regard, a situation in which the error occurs in the device in the active device and the device in the active state does not operate may occur. In the case of the storage device for the autonomous vehicle, when the data inside the storage device becomes unavailable, a serious problem may occur in driving the vehicle. This may lead to the serious accident causing loss of life or the like. Therefore, the present disclosure proposes the dual storage device for the autonomous vehicle that may prevent the safety accident by using storage in the standby state even in an emergency situation by having the plurality of storage devices inside the storage device. According to the present disclosure, even when one storage device is unable to operate normally, normal access to the other dually synchronized storage device is possible, so that stability of the entire system in the autonomous vehicle may be greatly improved.

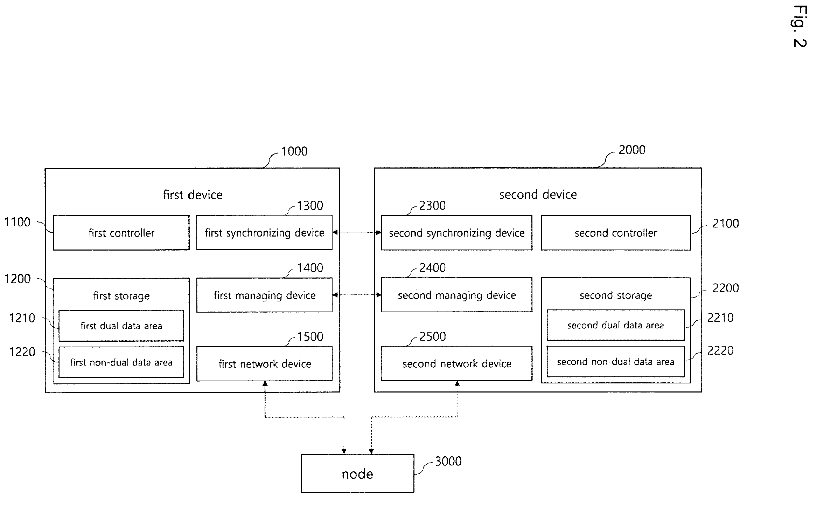

FIG. 2 is a specific block diagram of a dual storage device for an autonomous vehicle according to an embodiment.

Referring to FIG. 2, the first device 1000 included in the dual storage device for the autonomous vehicle according to one embodiment may include a first controller 1100, first storage 1200, a first synchronizing device 1300, a first managing device 1400, and a first network device 1500. In addition, the second device 2000 included in the dual storage device for the autonomous vehicle according to one embodiment may include a second controller 2100, second storage 2200, a second synchronizing device 2300, a second managing device 2400, and a second network device 2500.

FIG. 2 shows that each component is a separate department or device, but the present disclosure is not limited thereto, and some components are able to be constructed as one device. For example, the first synchronizing device 1300 and the first managing device 1400 may be expressed as one component, but the present disclosure may not be limited thereto. In addition, for example, the first controller 1100 and the first network device 1500 may be expressed as one component, but the present disclosure may not be limited thereto.

The first device 1000 may include the first controller 1100. Specifically, the first controller 1100 may transmit a control command to each of the first storage 1200, the first synchronizing device 1300, the first managing device 1400, and the first network device 1500 to execute an operation of each department. Unless otherwise specified below, it may be interpreted that operation of the first device 1000 is performed under control of the first controller 1100.

The first controller 1100 may classify data obtained by the first device 1000 as dual data or non-dual data. Specifically, the first controller 1100 may classify the data based on characteristics of the data. In this regard, the characteristics of the data may include a degree of relevance to safety, a size, a temporality, and an importance of the data.

According to one embodiment, the first controller 1100 may classify data directly related to the safety as the dual data. For example, the data directly related to the safety may be sensor data used to search for a nearby obstacle, current vehicle state data, and the like, but the present disclosure may not be limited thereto.

According to another embodiment, the first controller 1100 may classify data that is too large to be entirely stored in a first dual data area 1210 as the non-dual data. For example, the data that is too large may be a black box image, but the present disclosure may not be limited thereto.

According to another embodiment, the first controller 1100 may classify data that is not needed after being used temporarily or data that may be re-downloaded online as the non-dual data. For example, data with high temporality may be map information for the navigation, but may not be limited thereto.

According to another embodiment, the first controller 1100 may classify data with high importance as the dual data. For example, the data with the high importance may be core data (meta data or parity data) of the data classified as the non-dual data, but the present disclosure may not be limited thereto. In this regard, the core data may include information such as temporary modifications or data formats of the non-dual data.

The data classified as the dual data by the classification of the first controller 1100 may be stored in the first dual data area 1210. In addition, the data classified as the non-dual data by the classification of the first controller 1100 may be stored in a first non-dual data area 1220. In this regard, the data stored in the first dual data area 1210 may be synchronized with the second device 2000, but the data stored in the first non-dual data area 1220 may not be synchronized with the second device 2000. In this regard, regardless of the classification of the dual data or the non-dual data, the data stored in the first storage 1200 may be transferred to the external system via the node 3000.

The first storage 1200 may store various data and programs necessary for an electric system of the autonomous vehicle to operate. In addition, the first storage 1200 may store all data, such as the data obtained by the first device 1000 and data processed by the external system.

The first storage 1200 may temporarily or semi-permanently store the data. The first storage 1200 may be a hard disk drive (HDD), a solid state drive (SSD), a flash memory, a read-only memory (ROM), a random access memory (RAM), cloud storage, or the like, but may be implemented as various modules for storing the data without being limited thereto.

The first storage 1200 may include the first dual data area 1210 and the first non-dual data area 1220. In the first dual data area 1210, the dual data data that has a high degree of relevance to the safety, is small in size, requires permanent preservation, or has the high importance may be stored. In the first non-dual data area 1220, the non-dual data that has a low degree of relevance to the safety, is large in size, has the high temporality, or has low importance may be stored.

The first synchronizing device 1300 may perform a data synchronizing function with the second device 2000. Specifically, the first synchronizing device 1300 may transmit the data stored in the first storage 1200 to the second device 2000 while the first device 1000 in the active state is in communication with the node 3000. In this regard, the data transmitted from the first synchronizing device 1300 to the second device 2000 may be the data stored in the first dual data area 1210 of the first storage 1200. That is, the first synchronizing device 1300 may transmit the data included in the first dual data area 1210 to the second device 2000, but may not transmit the data included in the first non-dual data area 1220.

The first managing device 1400 may transmit a current state of the first device 1000 or identify a state of the second device 2000 via signal transmission and reception with the second device 2000. Specifically, the first managing device 1400 may transmit a first identification signal to the second device 2000. When a first response signal is obtained from the second device 2000 in response to the first identification signal, the first managing device 1400 may identify that the second device 2000 is in a live state. When the response to the first identification signal is not received from the second device 2000, the first managing device 1400 may identify that the second device 2000 has an error.

In addition, the first managing device 1400 may transmit a second response signal in response to a second identification signal transmitted by the second managing device 2400 of the second device 2000. For example, the first response signal or the second response signal may be a simple ACK signal. In addition, for example, the first response signal or the second response signal may be a signal containing specific state information of the first device 1000 or the second device 2000. In this regard, the specific state information may include various information such as a failure to perform a specific function, an occurrence of the error, or a normal operation.

In addition, when the first device 1000 is in the active state, the first managing device 1400 may manage a virtual IP address such that access of the external system may be routed to the node of the first device 1000. Via the virtual IP address managed by the first managing device 1400, the first device 1000 may obtain data from the node 3000 or transmit the data to the node 3000.

The first network device 1500 may help the first device 1000 and the node 3000 transmit and receive the data with each other. Specifically, the first network device 1500 may transmit the data stored in the first storage 1200 to the node 3000. When the first device 1000 is in the active state, the first network device 1500 may expose the first device 1000 on the network such that the external system may access the first device 1000 via the virtual IP address managed by the first managing device 1400 like local storage.

In addition, the first network device 1500 may obtain the data of the external system from the node 3000 and store the data in the first storage 1200. In this regard, before the data is stored in the first storage 1200, the data may be classified by the first controller 1100, and whether the data is to be stored in the first dual data area 1210 or the first non-dual data area 1220 may be determined based on the classification result.

The first network device 1500 may transmit the data stored in the first storage 1200 to the node 3000 when the first device 1000 is in the active state. However, when the first device 1000 is in the standby state or the error occurs in the first device 1000, the first network device 1500 may not transmit/receive the data with the node 3000.

The second device 2000 may include the second controller 2100. Specifically, the second controller 2100 may transmit a control command to each of the second storage 2200, the second synchronizing device 2300, the second managing device 2400, and the second network device 2500 to execute an operation of each department. Unless otherwise specified below, it may be interpreted that operation of the second device 2000 is performed under control of the second controller 2100.

Like the first controller 1100, the second controller 2100 may classify data obtained by the second device 2000 as the dual data or the non-dual data. Contents of the data classification of the second controller 2100 may be duplicated with the contents of the data classification of the first controller 1100, so that a detailed description thereof will be omitted.

The data classified as the dual data by the classification of the second controller 2100 may be stored in a second dual data area 2210. In addition, the data classified as the non-dual data by the classification of the second controller 2100 may be stored in a second non-dual data area 2220. In this regard, the data stored in the second dual data area 2210 may be synchronized with the first device 1000, but the data stored in the second non-dual data area 2220 may not be synchronized with the first device 1000. In this regard, regardless of the classification of the dual data or the non-dual data, the data stored in the second storage 2200 may be transferred to the external system via the node 3000.

Like the first storage 1200, the second storage 2200 may store various data and programs necessary for the electric system of the autonomous vehicle to operate. Because contents of the second storage 2200 may be duplicated with the contents of the first storage 1200, a detailed description thereof will be omitted.

The second synchronizing device 2300 may perform a data synchronizing function with the first device 1000. Specifically, the second synchronizing device 2300 may transmit the data stored in the second storage 2200 to the first synchronizing device 1300 of the first device 1000 while the second device 2000 in the active state is in communication with the node 3000. In this regard, the data transmitted from the second synchronizing device 2300 to the first synchronizing device 1300 of the first device 1000 may be the data stored in the second dual data area 2210 of the second storage 2200. That is, the second synchronizing device 2300 may transmit the data included in the second dual data area 2210 to the first synchronizing device 1300, but may not transmit the data included in the second non-dual data area 2220.

The second managing device 2400 may transmit the current state of the second device 2000 or identify the state of the first device 1000 via the signal transmission/reception with the first managing device 1400 of the first device 1000. Specifically, the second managing device 2400 may transmit the second identification signal to the first managing device 1400. When the second response signal is obtained from the first managing device 1400 in response to the second identification signal, the second managing device 2400 may identify that the first device 1000 is in the live state. When the response to the second identification signal is not received from the first managing device 1400, the second managing device 2400 may identify that the first device 1000 has the error.

In addition, the second managing device 2400 may transmit the first response signal in response to the first identification signal transmitted from the first managing device 1400. A description thereof will be omitted because it is duplicated with the above-described contents.

In addition, when the second device 2000 is in the active state, the second managing device 2400 may manage a virtual IP address such that access of the external system may be routed to the node of the second device 2000. Via the virtual IP address managed by the second managing device 2400, the second device 2000 may obtain the data from the node 3000 or transmit the data to the node 3000.

The second network device 2500 may help the second device 2000 and the node 3000 transmit and receive the data with each other. Specifically, the second network device 2500 may transmit the data stored in the second storage 2200 to the node 3000. When the second device 2000 is in the active state, the second network device 2500 may expose the second device 2000 on the network such that the external system may access the second device 2000 via the virtual IP address managed by the second managing device 2400 like the local storage.

In addition, the second network device 2500 may obtain the data of the external system from the node 3000 and store the data in the second storage 2200. In this regard, before the data is stored in the second storage 2200, the data may be classified by the second controller 2100, and whether the data is to be stored in the second dual data area 2210 or the second non-dual data area 2220 may be determined based on the classification result.

The second network device 2500 may transmit the data stored in the second storage 2200 to the node 3000 when the second device 2000 is in the active state. However, when the second device 2000 is in the standby state or the error occurs in the second device 2000, the second network device 2500 may not transmit/receive the data with the node 3000.

The method according to the embodiment may be implemented in a form of program instructions that may be executed via various computer means and recorded on a computer readable medium. The computer readable medium may include program instructions, data files, data structures, and the like alone or in combination. The program instructions recorded on the medium may be specially designed and configured for the embodiment or may be known and usable to those skilled in computer software. Examples of the computer readable recording media include magnetic media such as a hard disk, a floppy disk, and a magnetic tape, optical media such as a CD-ROM and a DVD, magneto-optical media such as a floptical disk, and hardware devices specially configured to store and execute the program instructions such as a ROM, a RAM, a flash memory, and the like. Examples of the program instructions include high-level language codes that may be executed by a computer using an interpreter or the like, as well as machine language codes such as those produced by a compiler. The hardware devices described above may be configured to act as one or more software modules to perform the operation of the embodiment, and vice versa.

As described above, although the embodiments have been described with the limited embodiments and drawings, those skilled in the art may make various modifications and variations from the above description. For example, appropriate results may be achieved even when the described techniques are performed in an order different from that of the described method, and/or the described components of the system, the structure, the device, the circuit, and the like are coupled or combined with the described method in a different form or are replaced with or substituted by other components or equivalents.

Therefore, other implementations, other embodiments, and equivalents of the claims are within the scope of the following claims.

## Claims

1. A dual storage device for an autonomous vehicle, the dual storage device comprising:
a first device;
a second device; and
a node connected to the first device or the second device to process data,
wherein the first device includes:
a first storage configured to store data;
a first synchronizing device configured to synchronize with the second device using the data stored in the first storage;
a first managing device configured to transmit and receive a state-related signal with the second device; and
a first network device configured to transmit the data stored in the first storage to the node,
wherein the second device includes:
a second storage configured to store data;
a second synchronizing device configured to synchronize with the first device using the data stored in the second storage;
a second managing device configured to transmit and receive a state-related signal with the first device; and
a second network device configured to transmit the data stored in the second storage to the node.

2. The dual storage device of claim 1, wherein the first synchronizing device is configured to transmit the data stored in the first storage to the second synchronizing device and transmit the data obtained from the second synchronizing device to the first storage,
wherein the second synchronizing device is configured to transmit the data stored in the second storage to the first synchronizing device and transmit the data obtained from the first synchronizing device to the second storage.

3. The dual storage device of claim 1, wherein the first managing device is configured to transmit a first identification signal to the second managing device, and the second managing device is configured to transmit a first response signal to the first managing device in response to the first identification signal,
wherein the second managing device is configured to transmit a second identification signal to the first managing device, and the first managing device is configured to transmit a second response signal to the second managing device in response to the second identification signal,
wherein the first managing device and the second managing device are configured to periodically transmit the first identification signal and the second identification signal, respectively.

4. The dual storage device of claim 1, wherein the first storage includes a first dual data area and a first non-dual data area,
wherein the second storage includes a second dual data area and a second non-dual data area,
wherein the first synchronizing device is configured to transmit data stored in the first dual data area to the second synchronizing device, but not transmit data stored in the first non-dual data area,
wherein the second synchronizing device is configured to transmit data stored in the second dual data area to the first synchronizing device, but not transmit data stored in the second non-dual data area.

5. The dual storage device of claim 4, wherein the first device includes a first controller configured to classify the obtained data as dual data or non-dual data based on characteristics of the data such that data classified as the dual data is stored in the first dual data area and data classified as the non-dual data is stored in the first non-dual data area,
wherein the second device includes a second controller configured to classify the obtained data as the dual data or the non-dual data based on characteristics of the data such that data classified as the dual data is stored in the second dual data area and data classified as the non-dual data is stored in the second non-dual data area.

6. The dual storage device of claim 5, wherein the characteristics of the data include a degree of relevance to safety, a size of data, a temporality, and an importance.

7. The dual storage device of claim 3, wherein the first network device is configured to transmit the data stored in the first storage to the node when the first device is in an active state,
wherein the second network device is configured to transmit the data stored in the second storage to the node when the second device is in the active state.

8. The dual storage device of claim 7, wherein the first device includes a first controller configured to determine whether the first device is in the active state based on whether the first managing device has obtained the first response signal,
wherein the second device includes a second controller configured to determine whether the second device is in the active state based on whether the second managing device has obtained the second response signal.
